# EUROPEAN PATENT APPLICATION

(11) **EP 3 153 370 A1**
(43) Date of publication of application: **12.04.2017**
(21) Application number: 15803029.6
(22) Date of filing: 01.06.2015
(51) Int. Cl.: B60W 30/14, G08G 1/09, G08G 1/16

(54) **VEHICLE TRAVEL CONTROL DEVICE**

(30) Priority: 06.06.2014 JP 2014117608
(71) Applicant: Hitachi Automotive Systems, Ltd., Hitachinaka-shi, Ibaraki 312-8503 (JP)
(72) Inventor: TAKAMI Tomoaki, Hitachinaka-shi Ibaraki 312-8503 (JP)
(74) Representative: MERH-IP Matias Erny Reichl Hoffmann Patentanwälte PartG mbB
(86) International application number: PCT/JP2015/065718
(87) International publication number: WO 2015/186648

(57) **Abstract**

The present invention relates to a travel control device for automatic drive vehicle, and provides a vehicle travel control device that does not require visual notification to other vehicles and that causes no sense of discomfort in any of passengers on a host vehicle or other vehicles around the host vehicle with respect to a preliminary operation of the host vehicle. A vehicle travel control device (10) that causes various devices assisting the driving of the host vehicle to perform a preliminary operation to prepare for a possible future event is provided with an external information acquisition unit (1), a host vehicle information acquisition unit (2), an other vehicle information acquisition unit (3) that acquires other vehicle information including whether another vehicle has an automatic drive function, and a preliminary operation control unit (5) that calculates a preliminary operation control amount for the various devices. In accordance with the determination as to whether the other vehicle is automatically driving, the preliminary operation control unit (5) determines the need for an adjustment in the preliminary operation control amount. If the adjustment is not required, the preliminary operation control unit (5) maintains the preliminary operation control amount as a final preliminary operation control amount. If required, the preliminary operation control unit adjusts the preliminary operation control amount to obtain a final preliminary operation control amount for the execution of the preliminary operation of the devices.

## Description

### Technical Field

The present invention relates to a vehicle travel control device that performs a preliminary operation for a matter to occur in the future on various devices assisting a driving operation of a host vehicle.

### Background Art

Recently, there is known an automatic drive vehicle which automatically controls a steering operation or a braking operation by the use of external information.

For example, PTL 1 discloses a travel control system that controls a travel speed of a host vehicle so that a vehicle-to-vehicle distance between the host vehicle and a preceding vehicle is kept to a predetermined distance.

More specifically, the travel control system includes an appropriate overtaking determination unit which determines whether the host vehicle appropriately overtakes the preceding vehicle on the basis of the travel states of the host vehicle and the preceding vehicle, an overtaking preparation operation execution unit which executes an overtaking preparation operation when the host vehicle can appropriately overtake the preceding vehicle, an overtaking possibility determination unit which determines whether the host vehicle can overtake the preceding vehicle on the basis of the traveling environment and the travel states of the host vehicle and the preceding vehicle, and an overtaking unit which executes the overtaking when it is determined that the host vehicle can overtake the preceding vehicle. In addition, when it is determined that the overtaking is appropriate, the intension of the overtaking is notified to the other vehicles through a direction indicator to be turned on while the host vehicle approaches a vehicle lane dividing line in an acceleration state.

Meanwhile, PTL 2 discloses a travel control device which calculates a first target speed in response to a vehicle-to-vehicle distance with respect to a preceding vehicle in front of a host vehicle, calculates a second target speed in response to road information, and controls a speed of the host vehicle so that the host vehicle is accelerated and decelerated within a predetermined range when a first control mode of controlling the speed of the host vehicle in response to the first target speed is switched to a second control mode of controlling the speed of the host vehicle in response to the second target speed. By employing the travel control device, a speed control is realized in which the occupant of the host vehicle does not feel uncomfortable before the speed of the host vehicle is reduced to a target speed when the host vehicle travels on a curve while following the preceding vehicle.

### Citation List

### Patent Literature

PTL 1: Japanese Patent Application Laid-Open (JP-A) No. 2009-248892
PTL 2: Japanese Patent Application National Publication (Laid-Open) No. 2006-347528

### Summary of Invention

### Technical Problem

In the travel control system disclosed in PTL 1, since the intension of the overtaking is notified to the other vehicle while the direction indicator is turned on, the visual alarm is essentially needed.

Meanwhile, in the travel control device disclosed in PTL 2, a speed control can be realized in which the occupant of the host vehicle does not feel uncomfortable. However, it is difficult to make sure whether the uncomfortable feeling of the occupant of the other vehicle can be prevented.

Incidentally, in the case of a control based on external information which cannot be viewed by the driver who drives the automatic drive vehicle having an automatic drive function and automatically driven on the basis of communication information or route information which is calculated by a highly accurate calculation, a problem arises in that the occupant of the vehicle around the automatic drive vehicle does not recognize the intension of the automatic drive control and feel uncomfortable.

For example, in the case of a control for a speed reduction based on the external information in which a green light changes to a red light after 5 seconds (hereinafter, a preparation operation for a matter in the future will be referred to as a preliminary operation), the following vehicle feels uncomfortable for the front automatic drive vehicle starting to be decelerated even in the green light.

Meanwhile, when the following vehicle is also an automatic drive vehicle, the preliminary operation is performed in the same way on the basis of the external information. For this reason, it is desirable to perform such a preliminary operation on the following vehicle in order to prevent the uncomfortable feeling of the occupant of the following vehicle.

Here, an object of the invention is to provide a travel control device of an automatic drive vehicle, that is, a vehicle travel control device that does not need a visual alarm for the other vehicle and prevents an occupant of the other vehicle around a host vehicle from feeling uncomfortable for a preliminary operation of the host vehicle.

### Solution to Problem

In order to solve the above issue, a vehicle travel control device according to the present invention performs a preliminary operation for a matter to occur in the future on various devices assisting a driving operation of a host vehicle, and includes: an external information acquisition unit that acquires external information; a host vehicle information acquisition unit that acquires host vehicle information; an other vehicle information acquisition unit that acquires other vehicle information on whether the other vehicle has an automatic drive function; and a preliminary operation control unit that calculates a preliminary operation control amount for the various devices on the basis of the external information, the host vehicle information, and the other vehicle information, wherein the preliminary operation control unit determines whether to adjust the preliminary operation control amount in response to a determination on whether the other vehicle is automatically driven, wherein when the adjustment is not needed, the preliminary operation control amount is kept and set as a final preliminary operation control amount, wherein when the adjustment is needed, the preliminary operation control amount is adjusted and set as the final preliminary operation control amount, and wherein the preliminary operation is performed on the devices on the basis of the final preliminary operation control amount.

### Advantageous Effects of Invention

According to the vehicle travel control device of the invention, since the necessity of the preliminary operation for various devices assisting a driving operation is determined or the preliminary operation control amount is set or adjusted on the basis of a determination on whether the other vehicle is automatically driven, it is possible to reduce the uncomfortable feeling of the occupant of the other vehicle and to perform a safe and smooth traveling operation by the preliminary operation.

### Brief Description of Drawings

[FIG. 1] FIG. 1 is a configuration diagram illustrating a travel control device of the invention.
[FIG. 2] FIG. 2 is a configuration diagram illustrating an external information acquisition unit.
[FIG. 3] FIG. 3 is a configuration diagram illustrating a host vehicle information acquisition unit.
[FIG. 4] FIG. 4 is a configuration diagram illustrating a necessity determination unit.
[FIG. 5] FIG. 5 is a configuration diagram illustrating a preliminary operation control unit.
[FIG. 6] FIG. 6 is a diagram illustrating a highway that employs the travel control device of the invention.
[FIG. 7] FIG. 7 is a diagram illustrating a first embodiment of a control flow of the travel control device of the invention.
[FIG. 8] FIG. 8 is a diagram illustrating a preliminary operation adjustment amount calculation method.
[FIG. 9] FIG. 9 is a diagram illustrating a case where an opposite vehicle driven automatically exists at an intersection employing the travel control device of the invention.
[FIG. 10] FIG. 10 is a diagram illustrating a case where an opposite vehicle not driven automatically exists at an intersection employing the travel control device of the invention.
[FIG. 11] FIG. 11 is a diagram illustrating a second embodiment of a control flow of the travel control device of the invention.
[FIG. 12] FIG. 12 is statistical data illustrating a relation between a speed of an opposite vehicle and a distance (a right turn determination distance) to the opposite vehicle determined to turn right at a right turn.

### Description of Embodiments

Hereinafter, embodiments of a vehicle travel control device of the invention will be described with reference to the drawings.

### (Configuration of Travel Control Device)

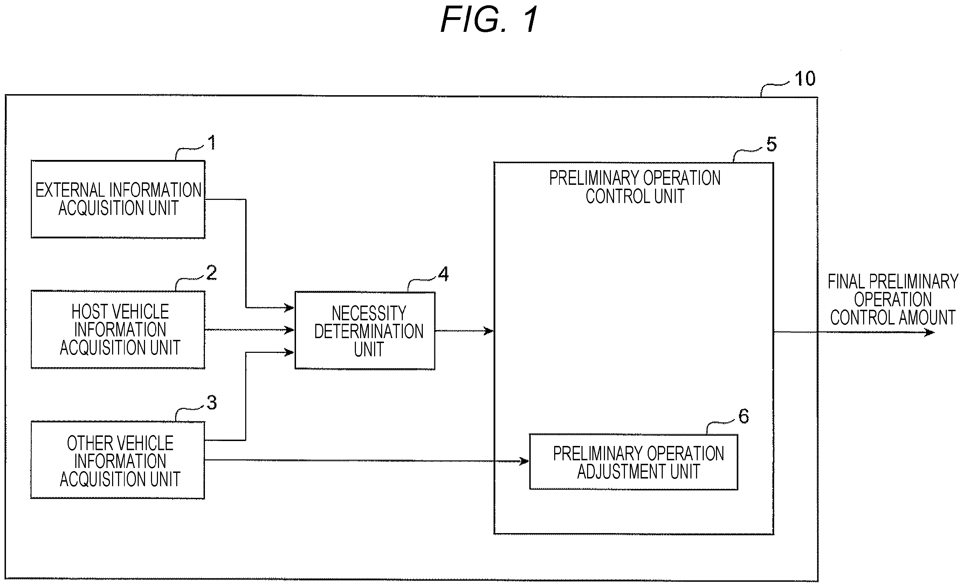

FIG. 1 is a configuration diagram illustrating a travel control device of the invention.

The travel control device 10 includes an external information acquisition unit 1, a host vehicle information acquisition unit 2, the other vehicle information acquisition unit 3, a necessity determination unit 4, and a preliminary operation control unit 5.

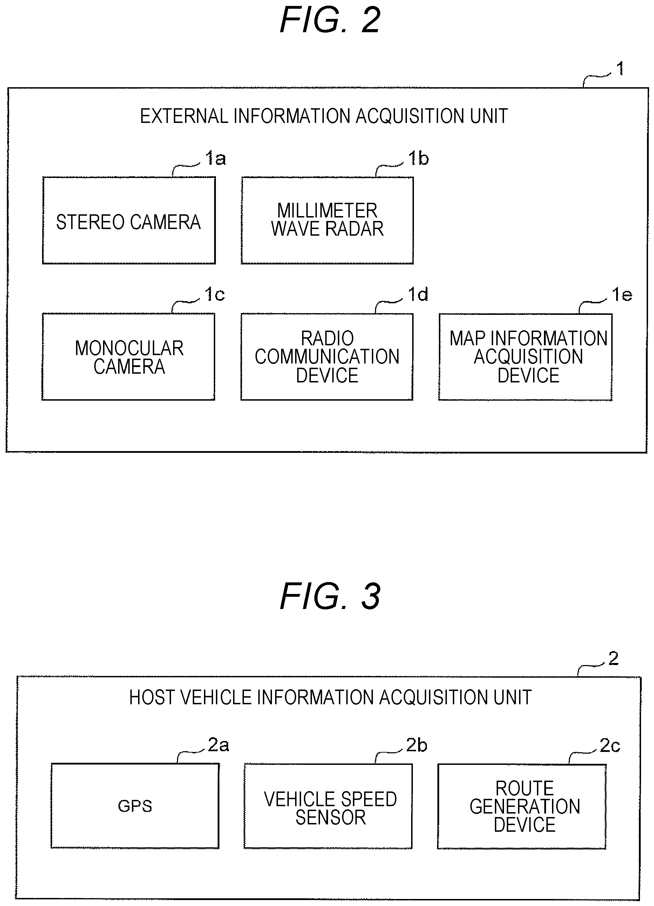

As illustrated in FIG. 2, the external information acquisition unit 1 includes a stereo camera 1a or a millimeter wave radar 1b which is able to measure a distance and a relative speed with respect to a barrier around a host vehicle, a monocular camera 1c which is able to recognize a white line or the like on a road, a radio communication device 1d which is able to acquire a switching timing of a signaling device or traffic congestion information, and a map information acquisition device 1e which is able to acquire road information including a position of a signaling device on a road where the host vehicle travels.

Further, as illustrated in FIG. 3, the host vehicle information acquisition unit 2 includes a global positioning system (GPS) 2a which is able to acquire a position of a host vehicle, a vehicle speed sensor 2b which detects a vehicle speed, and a route generation device 2c which provides a route to a destination registered by an occupant.

Further, the other vehicle information acquisition unit 3 includes a radio communication device, a camera, and the like and acquires information on whether the other vehicles are automatically driven, information on whether specific preliminary operation control devices are provided in the other vehicles, speed or position values of the other vehicles, and a separation distance between the host vehicle and the other vehicle via a communication with a plurality of other vehicles.

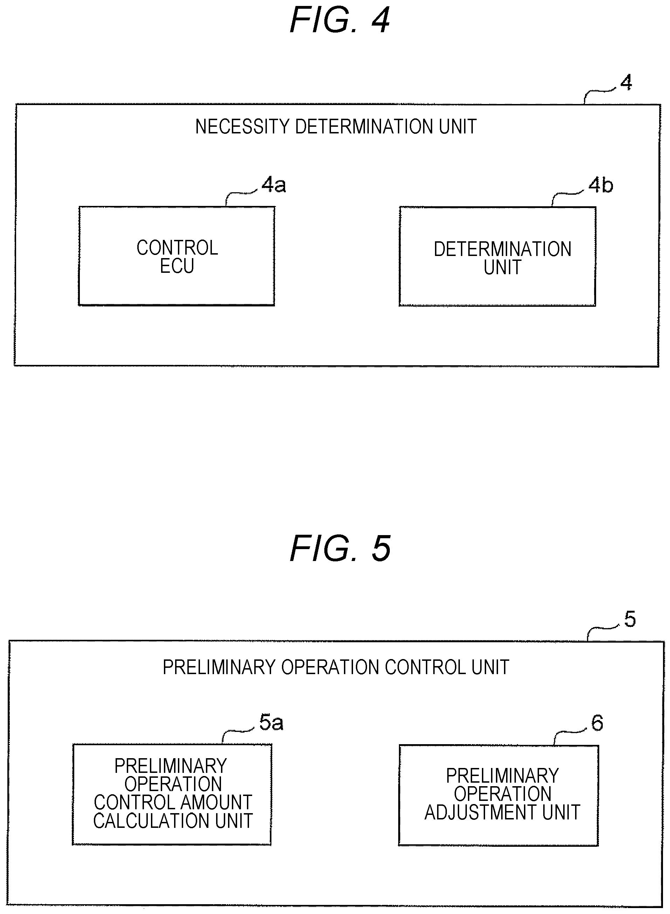

Further, the necessity determination unit 4 includes a control ECU 4a and a determination unit 4b as illustrated in FIG. 4.

The control ECU 4a is a computer including a central processing unit (CPU), a random access memory (RAM), a read only memory (ROM), and the like and calculates a preliminary operation control amount in response to the external information and the host vehicle information input thereto.

The determination unit 4b determines whether a preliminary operation control amount in the preliminary operation control unit 5 to be described later is needed on the basis of the external information acquired by the external information acquisition unit 1, the host vehicle information acquired by the host vehicle information acquisition unit 2, and the other vehicle information acquired by the other vehicle information acquisition unit 3 to determine whether the other vehicle has an automatic drive function.

If the other vehicle has the automatic drive function, the other vehicle also understands the preliminary operation of the device assisting the driving operation of the host vehicle and performs the preliminary operation of the device assisting the driving operation of the other vehicle in a similar way.

Here, the "automatic drive function" literally indicates a function in which a vehicle is automatically driven on the basis of external information received via a communication without various devices to be operated by an occupant.

Further, the "automatic drive state" of the specification indicates a state where the automatic drive function is enabled. Then, a case where the automatic drive function is not enabled or a case where the automatic drive function state cannot be determined due to a too long vehicle-to-vehicle distance between the host vehicle and the other vehicle is not included in the "automatic drive state."

When the determination unit 4b determines that the calculation of the preliminary operation control amount in the preliminary operation control unit 5 is not needed, any preliminary operation controls is not performed on a device, for example, an accelerator or a brake assisting the driving operation of the host vehicle. In such a case, even when the device is not under the preliminary operation control, the occupant of the other vehicle does not feel uncomfortable.

As illustrated in FIG. 5, the preliminary operation control unit 5 includes a preliminary operation control amount calculation unit 5a and a preliminary operation adjustment unit 6.

The preliminary operation control amount calculation unit 5a calculates, for example, a preliminary operation control amount in speed reduction on the basis of the external information (for example, signal information including a signal switching timing obtained from the front signaling device in the travel direction) or the other vehicle information (for example, information on the separation distance or the speed with respect to the following vehicle not automatically driven) with respect to the host vehicle information (for example, current speed information).

The determination unit 4b determines whether the other vehicle is automatically driven on the basis of the external information acquired by the external information acquisition unit 1 in order to determine whether to adjust the preliminary operation control amount by the preliminary operation adjustment unit 6.

When it is determined that the preliminary operation control amount needs to be adjusted, the preliminary operation adjustment amount is calculated, the preliminary operation control amount calculated by the preliminary operation control unit 5 is corrected on the basis of the preliminary operation adjustment amount, and thus the final preliminary operation control amount is obtained.

When it is determined that the preliminary operation control amount does not need to be adjusted by the preliminary operation adjustment unit 6, the preliminary operation control amount calculated by the preliminary operation control unit 5 is kept as a current amount and the kept preliminary operation control amount is set as the final preliminary operation control amount.

Here, the "correction" of the preliminary operation control amount based on the preliminary operation adjustment amount indicates a state where the calculated preliminary operation adjustment amount (for example, a correction coefficient) is multiplied by the preliminary operation control amount so that a speed reduction amount caused by an accelerator is reduced.

According to the travel control device 10 of the invention, since the preliminary operation control amount is set or adjusted or the necessity of the preliminary operations of various devices assisting the driving operation is determined on the basis of the determination on whether the other vehicle is automatically driven, the occupant of the other vehicle may not feel uncomfortable or the uncomfortable feeling can be reduced. Further, it is possible to realize a safe and smooth traveling operation by the preliminary operation of the device assisting the driving operation of the host vehicle.

### (First Application Example of Travel Control Device of Invention)

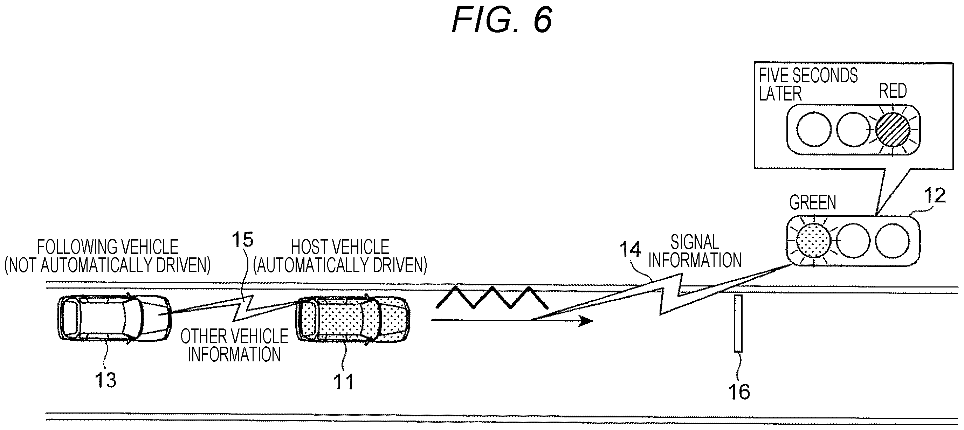

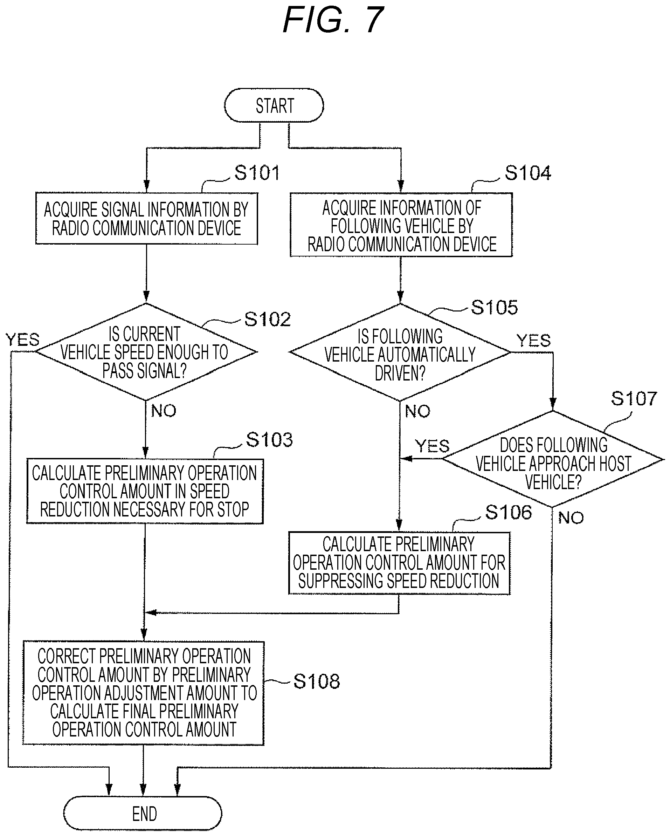

FIG. 6 is a diagram illustrating a highway that employs the travel control device of the invention and FIG. 7 is a diagram illustrating a first embodiment of a control flow of the travel control device of the invention.

The host vehicle 11 receives signal information 14 including a signal switching timing from the front signaling device 12 by the external information acquisition unit 1 constituting the travel control device 10 mounted on the vehicle in the travel state.

Further, the host vehicle 11 receives the other vehicle information 15 from the following vehicle 13 by the other vehicle information acquisition unit 3 constituting the travel control device 10.

The automatic drive control device 10 determines whether to generate the preliminary operation control amount for reducing the speed of the host vehicle 11 by the necessity determination unit 4 constituting the travel control device 10 on the basis of the received signal information 14 and the other vehicle information 15 (including information on whether the other vehicle is automatically driven and information on the speed of the other vehicle or the vehicle-to-vehicle distance with respect to the host vehicle) as well as the host vehicle information (a speed or the like) acquired by the host vehicle information acquisition unit 2.

When the necessity determination unit 4 determines that the preliminary operation control amount needs to be generated, a preliminary operation control amount of a device such as an accelerator or a brake is calculated by the preliminary operation control unit 5 constituting the travel control device 10.

After the preliminary operation control amount is calculated, it is determined whether to further adjust the preliminary operation control amount by the preliminary operation adjustment unit 6. Then, when the adjustment is needed as a determination result, the preliminary operation control amount is corrected by the preliminary operation adjustment amount and a device such as an accelerator or a brake is controlled on the basis of the corrected final preliminary operation control amount.

Here, a detailed control example will be described with reference to the flowchart of FIG. 7.

First, information on a signal switching timing (which illustrates a timing at which a green light changes to a red light) is acquired by the radio communication device 1d (step S101).

Next, it is determined whether the host vehicle can pass by this signal at a current vehicle speed by comparing a time taken until the host vehicle 11 passes by the signaling device 12 with a time taken until a signal changes from a green light to a red light (step S102).

This determination is performed by the necessity determination unit 4.

If a time taken until the host vehicle passes by the signaling device 12 is shorter than a time taken until a green light changes to a red light, it is determined that the host vehicle cannot pass by the signal. Then, a preliminary operation control for a device is not performed by the automatic drive control device 10.

Since the preliminary operation is not performed, the host vehicle 11 passes by the signaling device 12 at a current vehicle speed.

Meanwhile, when a time taken until a green light changes to a red light is longer than a time taken until the host vehicle passes by the signaling device 12 is long so that the host vehicle cannot pass by the signal, a deceleration necessary for the stop at a stop position 16 of the signaling device 12 is calculated (step S103).

The deceleration is calculated by the preliminary operation control unit 5.

Here, the deceleration is calculated by, for example, an equation (a current host vehicle speed²) / {2 x (a distance from the host vehicle 11 to the stop position 16)}.

In accordance with the acquisition of the signal switching timing information using the radio communication device 1d, the information of the following vehicle 13 is acquired by the radio communication device 1d or the other vehicle information acquisition unit 3 (step S104).

The information of the following vehicle 13 includes information on whether the following vehicle 13 is automatically driven and thus an actual determination is made by the necessity determination unit 4 (step S105).

In step S104, when the following vehicle 13 does not include the radio communication device 1d or the following vehicle including the radio communication device 1d is too far from the host vehicle, the other vehicle information 15 cannot be accurately acquired.

In this case, it is determined that the following vehicle 13 is not automatically driven.

By this determination, it is possible to perform a safe control so that the occupant of the following vehicle 13 does not feel uncomfortable.

When it is determined that the following vehicle 13 is not automatically driven, a preliminary operation adjustment amount (a correction coefficient) suppressing a speed reduction so that the occupant of the following vehicle 13 does not feel uncomfortable is calculated and thus a speed reduction amount is adjusted.

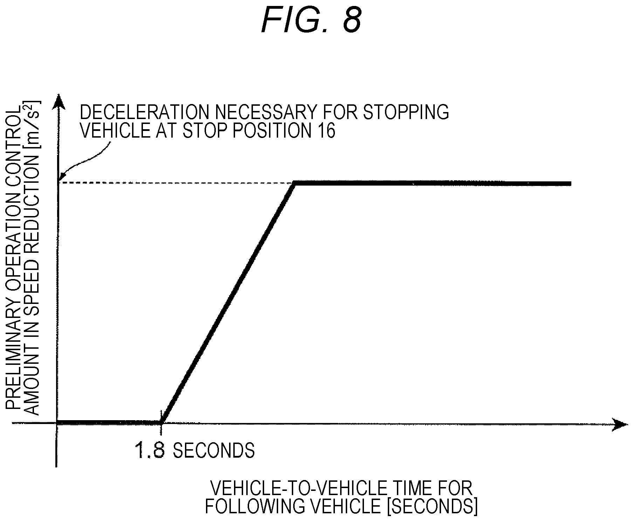

The preliminary operation adjustment amount is calculated with respect to the vehicle-to-vehicle time for the following vehicle 13 by the preliminary operation adjustment unit 6 so that the final preliminary operation control amount satisfies a correlation graph between the vehicle-to-vehicle time and the preliminary operation control amount in speed reduction indicated by FIG. 8.

That is, when the vehicle-to-vehicle time is long, the preliminary operation adjustment amount is calculated so that the host vehicle is stopped at a deceleration necessary for the stop at the stop position 16 without considering the following vehicle 13 (step S106) and the preliminary operation control amount is corrected on the basis of the calculated preliminary operation adjustment amount.

For example, when the vehicle-to-vehicle time is 1.8 seconds which is generally regarded as an enough vehicle-to-vehicle time, the preliminary operation adjustment amount is calculated so that the speed of the host vehicle is not reduced any more (step S106).

In step S105, when it is determined that the following vehicle 13 is automatically driven, the necessity determination unit 4 determines whether the following vehicle 13 approaches the host vehicle 11 (step S107).

When it is determined that the following vehicle 13 approaches the host vehicle, a preliminary operation adjustment amount suppressing a speed reduction is calculated (step S106) and a control of suppressing a speed reduction is performed.

This control is made to prevent the occupant of the following vehicle 13 from feeling uncomfortable when a speed reduction control based on the signal information 14 is not performed although the following vehicle 13 is automatically driven.

The preliminary operation control amount is corrected in such a manner that the preliminary operation control amount calculated in step S103 is multiplied by the preliminary operation adjustment amount (the correction coefficient or the like) calculated in step S106 and thus a final preliminary operation control amount is calculated (step S108).

By such a control, when the following vehicle 13 is automatically driven, both the host vehicle 11 and the following vehicle 13 predict a timing in which a green light changes to a red light and perform a preliminary operation in speed reduction. Accordingly, the occupants of both vehicles can perform a smooth traveling operation without any uncomfortable feeling.

Meanwhile, when the following vehicle 13 is not automatically driven, a speed reduction starts after the signaling device 12 has a red light without a preliminary operation for a device. Accordingly, it is possible to prevent or reduce the uncomfortable feeling of the occupant of the following vehicle 13.

### (Second Application Example of Travel Control Device of Invention)

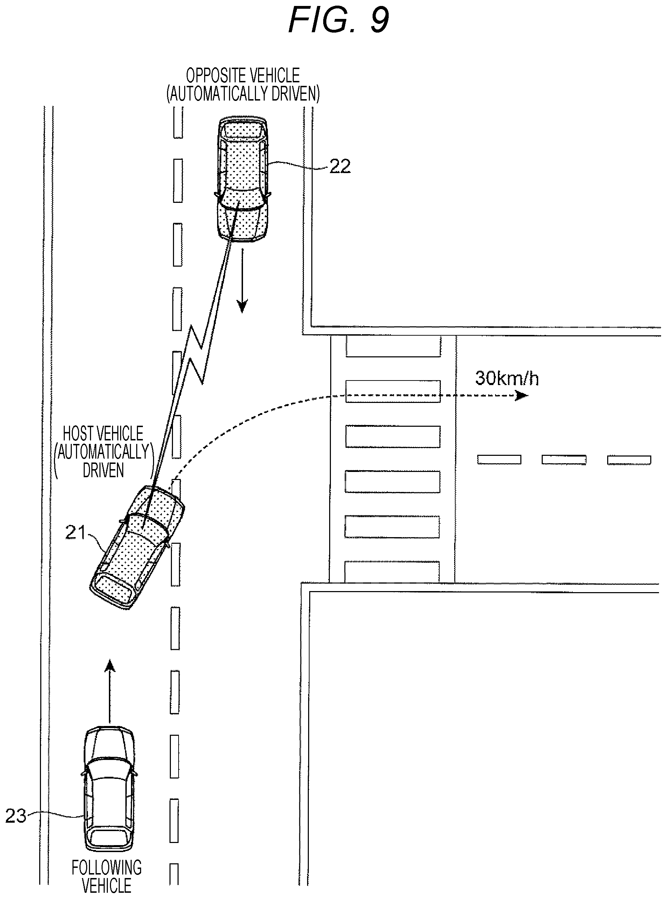

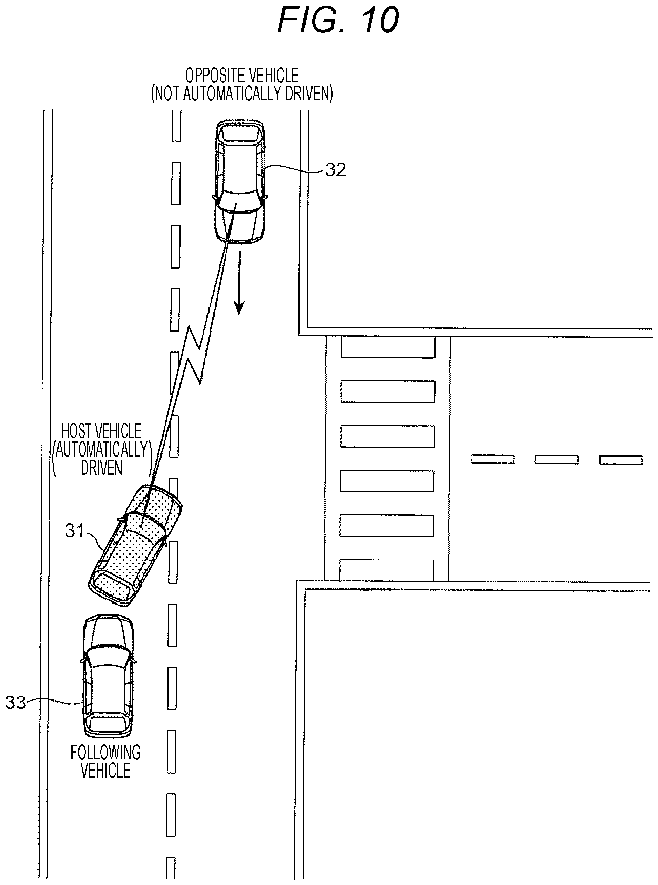

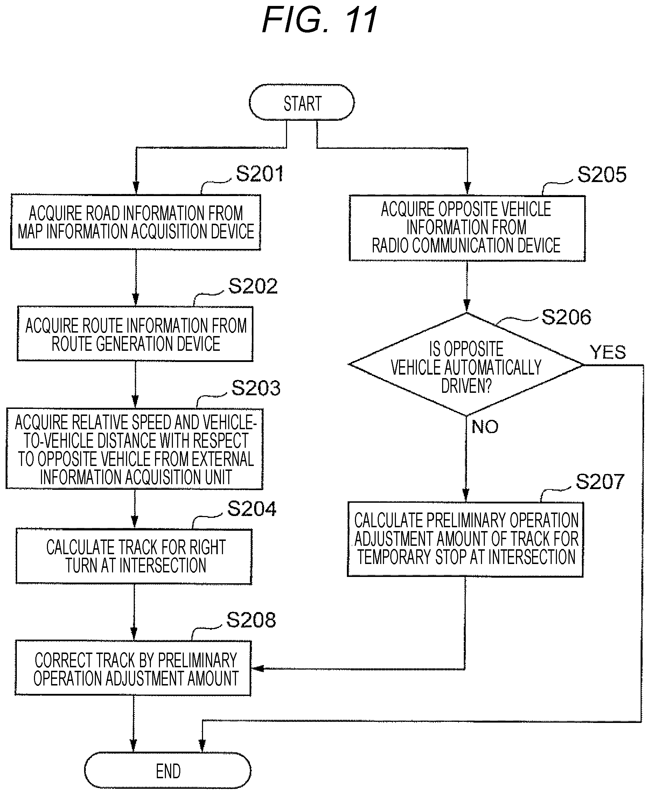

FIG. 9 is a diagram illustrating a case where an opposite vehicle which is automatically driven exists at an intersection employing the travel control device of the invention and FIG. 10 is a diagram illustrating a case where an opposite vehicle which is not automatically driven exists at an intersection employing the travel control device of the invention. Further, FIG. 11 is a diagram illustrating a second embodiment of a control flow of the travel control device of the invention.

In FIGS. 9 and 10, host vehicles 21 and 31 are about to turn right at the intersection and are temporarily stopped within the intersection in response to the automatic drive states of opposite vehicles 22 and 32.

A detailed control example in such a case will be described with reference to a flowchart of FIG. 11.

Information on a road shape and a position at the intersection is acquired from the map information acquisition device le (step S201).

A route to a destination registered in advance by an occupant is acquired from the route generation device 2c (step S202).

A vehicle-to-vehicle distance and a relative speed with respect to the opposite vehicles 22 and 32 are acquired from the stereo camera 1a or the millimeter wave radar 1b (step S203).

A track for a right turn at the intersection is calculated on the basis of the route and the vehicle-to-vehicle distance or the relative speed of each of the opposite vehicles 22 and 32 (step S204).

For example, when the host vehicle cannot turn right before the opposite vehicles 22 and 32 pass by the intersection, a track is calculated so that the host vehicle is temporarily stopped within the intersection. Meanwhile, when the host vehicle can turn right, a track is calculated so that the host vehicle turns right at an appropriate speed.

The calculation of the track performed herein is performed by the preliminary operation adjustment unit 6 and the track is calculated so that a time for a right turn is set as short as possible.

Accordingly, the host vehicle can turn right at a timing faster than a case where the occupant manually turns right and thus a traffic flow at the vehicle lane on which the host vehicles 21 and 31 travel becomes smooth.

A control based on the other vehicle information is also performed along with a series of control performed until the track for a right turn at the intersection is calculated in step S201 to step S204.

That is, opposite vehicle information is first acquired from the radio communication device 1d (step S205).

This information includes information on whether the opposite vehicles 22 and 32 are "automatically driven" and thus an actual determination is made by the necessity determination unit 4 (step S206).

Similarly to the first application example, when the opposite vehicles 22 and 32 do not include the radio communication device 1d or the opposite vehicle including the radio communication device is too far from the host vehicle, it is determined that the opposite vehicles 22 and 32 are not automatically driven. Accordingly, a safe control is performed so that the occupants of the opposite vehicles 22 and 32 do not feel uncomfortable.

When it is determined that the opposite vehicles 22 and 32 are not automatically driven, a track adjustment amount involving with a preliminary operation is calculated so that the host vehicle is temporarily stopped within the intersection.

As for the preliminary operation adjustment amount in this case, the preliminary operation adjustment amount is calculated so that the opposite vehicle does not feel uncomfortable and the host vehicle is temporarily stopped when the speed of the opposite vehicle is fast.

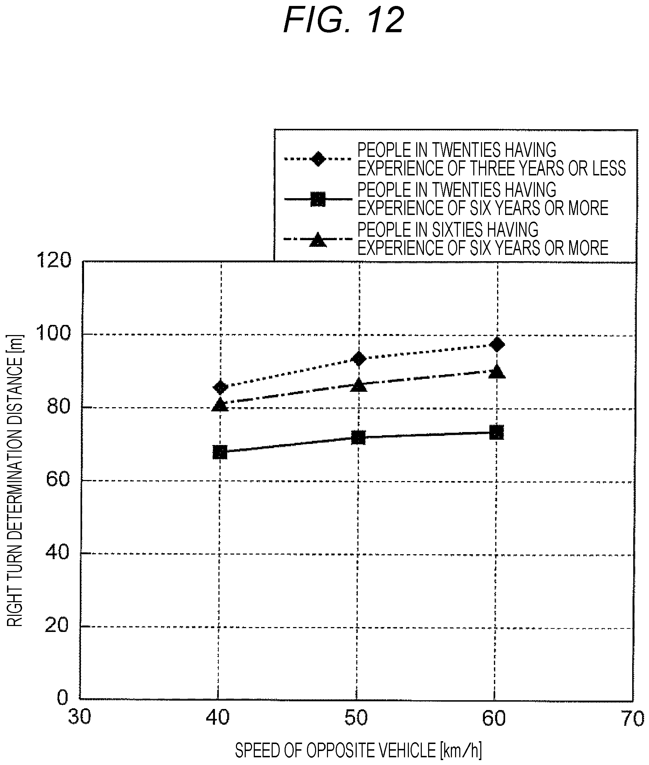

Here, FIG. 12 is statistical data illustrating a relation between a speed of the opposite vehicle and a distance (a right turn determination distance) to the opposite vehicle determined to turn right at a right turn.

Although there is a slight difference in accordance with the age or the driving experience, there is a high possibility that the occupant of the opposite vehicle feels uncomfortable when the host vehicle turns right at a vehicle-to-vehicle distance shorter than the right turn determination distance. Thus, a preliminary operation adjustment amount is calculated so that the host vehicle is temporarily stopped within the intersection (step S207).

A track (a preliminary operation control amount) is corrected on the basis of the calculated preliminary operation adjustment amount and a final track (a final preliminary operation control amount) is calculated (step S208).

By such a control, when the opposite vehicle 22 is automatically driven and the host vehicle turns right according to the track calculated in step S204 without a temporary stop, for example, as illustrated in FIG. 9, the following vehicle 23 moving forward does not need to wait the host vehicle. Accordingly, there is an effect that a smooth traffic flow can be formed.

Meanwhile, when the opposite vehicle 32 is not automatically driven as illustrated in FIG. 10, the host vehicle is temporarily stopped within the intersection. Accordingly, the occupant of the opposite vehicle 32 which is not automatically driven does not feel uncomfortable.

### Reference Signs List

- 1: external information acquisition unit
- 2: host vehicle information acquisition unit
- 3: other vehicle information acquisition unit
- 4: necessity determination unit
- 5: preliminary operation control unit
- 6: preliminary operation adjustment unit
- 10: travel control device

## Claims

1. A vehicle travel control device that performs a preliminary operation for a matter to occur in the future on various devices assisting a driving operation of a host vehicle, the vehicle travel control device comprising:
an external information acquisition unit that acquires external information;
a host vehicle information acquisition unit that acquires host vehicle information;
an other vehicle information acquisition unit that acquires other vehicle information on whether the other vehicle has an automatic drive function; and
a preliminary operation control unit that calculates a preliminary operation control amount for the various devices on the basis of the external information, the host vehicle information, and the other vehicle information,
wherein the preliminary operation control unit determines whether to adjust the preliminary operation control amount in response to a determination on whether the other vehicle is automatically driven,
wherein when the adjustment is not needed, the preliminary operation control amount is kept and set as a final preliminary operation control amount,
wherein when the adjustment is needed, the preliminary operation control amount is adjusted and set as the final preliminary operation control amount, and
wherein the preliminary operation is performed on the devices on the basis of the final preliminary operation control amount.

2. The vehicle travel control device according to Claim 1, further comprising:
a necessity determination unit that determines whether to calculate the preliminary operation control amount in the preliminary operation control unit on the basis of the external information, the host vehicle information, and the other vehicle information,
wherein when the necessity determination unit determines that the preliminary operation control amount needs to be calculated, the preliminary operation control amount is calculated by the preliminary operation control unit.

3. The vehicle travel control device according to Claim 1 or 2,
wherein the preliminary operation control unit includes a preliminary operation adjustment unit,
wherein a preliminary operation adjustment amount is calculated by the preliminary operation adjustment unit, and
wherein the final preliminary operation control amount is calculated in such a manner that the preliminary operation control amount calculated by the preliminary operation control unit is corrected by the preliminary operation adjustment amount.

4. The vehicle travel control device according to Claim 3,
wherein when the other vehicle is not automatically driven as a determination result, the preliminary operation adjustment amount is calculated by the preliminary operation adjustment unit.

5. The vehicle travel control device according to Claim 3,
wherein when the other vehicle is automatically driven and the other vehicle approaches the host vehicle as a determination result, the preliminary operation adjustment amount is calculated by the preliminary operation adjustment unit.

6. The vehicle travel control device according to Claim 3,
wherein when the other vehicle is automatically driven and the other vehicle does not approach the host vehicle as a determination result, the preliminary operation adjustment amount is not calculated and the preliminary operation control amount is set as the final preliminary operation control amount.

7. The vehicle travel control device according to Claim 3,
wherein when the other vehicle does not have the automatic drive function or information on whether the automatic drive function exists, the other vehicle is not in an automatic drive state as a determination result and the preliminary operation adjustment amount is calculated by the preliminary operation adjustment unit.
